# EUROPEAN PATENT SPECIFICATION

(11) **EP 0 311 512 B1**
(45) Date of publication and mention of the grant of the patent: **12.01.1994**
(21) Application number: 88402513.1
(22) Date of filing: 04.10.1988
(51) Int. Cl.: G02B 1/04, B29D 11/00

(54) **Plastic optical fiber**
Plastische optische Faser
Fibre optique en matière plastique

(30) Priority: 09.10.1987 JP 255683/87; 25.12.1987 JP 327231/87; 25.12.1987 JP 327233/87
(43) Date of publication of application: 12.04.1989
(73) Proprietor: FUJITSU LIMITED, Kawasaki-shi, Kanagawa 211 (JP)
(72) Inventor: Tanaka, Akira, Takatsu-ku Kawasaki-shi Kanagawa 213 (JP); Takoshima, Takehisa, Nishi-ku Sapporo-shi Hokkaido 006 (JP); Nagatani, Shinpei, Midori-ku Yokohama-shi Kanagawa 227 (JP); Sawada, Hisashi, Nakahara-ku Kawasaki-shi Kanagawa 211 (JP); Takahashi, Eietsu, Yokohama-shi Kanagawa 245 (JP)
(74) Representative: Joly, Jean-Jacques

(56) References cited:
- EP-A- 0 223 056
- WO-A-86/02653
- JP-A-62 220 559
- PATENT ABSTRACTS OF JAPAN, vol. 9, no. 239 (P-391)[1962], 25th September 1985; & JP-A-60 93 407
- PATENT ABSTRACTS OF JAPAN, vol. 10, no. 152 (P-462)[2208], 3rd June 1986; & JP-A-61 6604

## Description

### (1) Field of the Invention

The present invention relates to plastic optical fibers, and more particularly to a fiber having a resin molded core and an adapted cladding.

### (2) Description of the Related Art

As the core of the optical fiber, there has been used polystyrene (PS) or poly(methyl methacrylate) (PMMA), but the heat distortion temperature (glass transition temperature) of these materials is low and the core is softened in a high-temperature atmosphere maintained of 100°C, or higher and therefore, application is limited to a temperature of about 80°C or lower. As a means of overcoming this defect, a plastic optical fiber has been proposed comprising a core composed of a polycarbonate (PC) having an excellent transparency and a high heat distortion temperature of about 135°C (see, for example, Japanese Examined Patent Publication No. 52-40987 and Japanese Unexamined Patent Publication No. 60-32004).

Nevertheless, even in the plastic optical fiber has a core composed of PC, if a resin composed mainly of poly-4-methylpentene-1 (PMP) is used as the cladding material, as proposed in Japanese unexamined Patent Publication No. 62-195606, when the optical fiber is abruptly heated from room temperature to a high temperature of about 130°C, extreme deformation of the optical fiber occurs due to the difference in the shrinkage caused by the difference in the thermal expansion coefficient of the PC and PMP and the thermal deformation of the PC. Accordingly, great advantages will be gained if a material having a higher heat resistance than that of PC, and able to be used as the core material of a plastic optical fiber with a cladding made of compatible plastics material, can be found.

Examples of plastic fiber optic cables having a core corresponding to that defined in the preamble of claim 1 are disclosed in patent documents JP-A-60 93407 and EP-A-0 223 056.

### SUMMARY OF THE INVENTION

Therefore, an object of the present invention is to provide a plastic optical fiber, which has an excellent optical characteristic and heat resistance.

This object is achieved with the plastic optical fiber defined in claim 1.

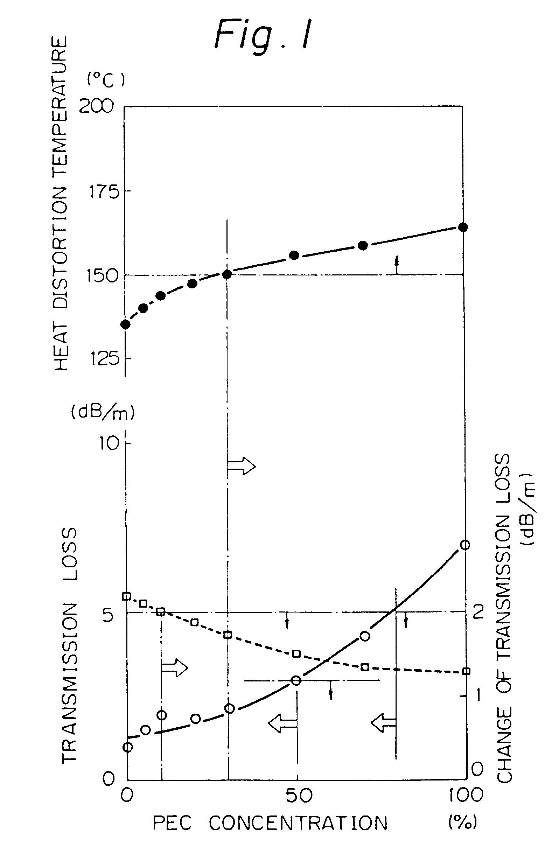

As seen from Fig. 1, in the resin molded core of the present invention, when the amount incorporated of the polyester carbonate is increased, the light transmission loss is increased but the heat distortion temperature is considerably raised and a high heat resistance is obtained.

In what follows, the core of the present fiber shall be referred to as the body, which is distinct from the cladding.

### BRIEF DESCRIPTION OF THE DRAWINGS

Figure 1 is a graph illustrating the relationship among the mixing ratio of PC and PEC, the transmission loss, the change of the transmission loss and the heat distortion temperature in the solid solution of PC and PEC according to the present invention;
Fig. 2 is a transmission loss spectrum diagram obtained when the above-mentioned mixing ratio is changed;
Fig. 3 is a diagram illustrating the structure of an optical fiber according to an embodiment of the present invention;
Fig. 4 is a graph illustrating the relationship among the mixing ratio of PMMA and PVDF₂ , the transmission loss and the change of the transmission loss in an optical fiber having a PC/PEC core and a PMMA/PVDF₂ cladding;
Fig. 5 is a graph illustrating the relationship between the mixing ratio of PMMA and PVDF₂ and the transmission loss in an optical fiber of a PMMA/PVDF₂ blend;
Fig. 6 is a graph illustrating the relationship among the mixing ratio of PMMA and PVDF₂ , the heat distortion temperature, the elongation and the light transmittance in an optical fiber of a PMMA/PVDF₂ blend;
Fig. 7 is a diagram illustrating the structure of a light guide according to another embodiment of the present invention;
Fig. 8 is a diagram illustrating the structure of an optical disk substrate according to a still another embodiment of the present invention; and,
Fig. 9 is a diagram illustrating the structure of a plastic lens according to a still another embodiment of the present invention.

### DESCRIPTION OF THE PREFERRED EMBODIMENTS

Embodiments of the present invention will now be described in detail.

The polycarbonate (PC) valuable for use in the present invention can be represented by the following general formula: 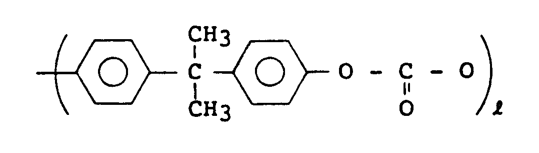
wherein ℓ is an integer.

The polyester carbonate (PEC) used in the present invention can be represented by the following general formula: 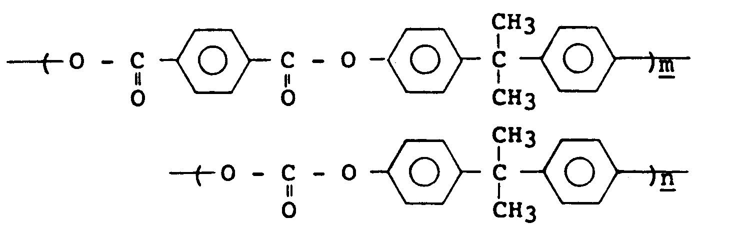
wherein m and n are integers.

The first embodiment, in which the resin molded body of the present invention is used as a core of a plastic optical fiber, will now be described.

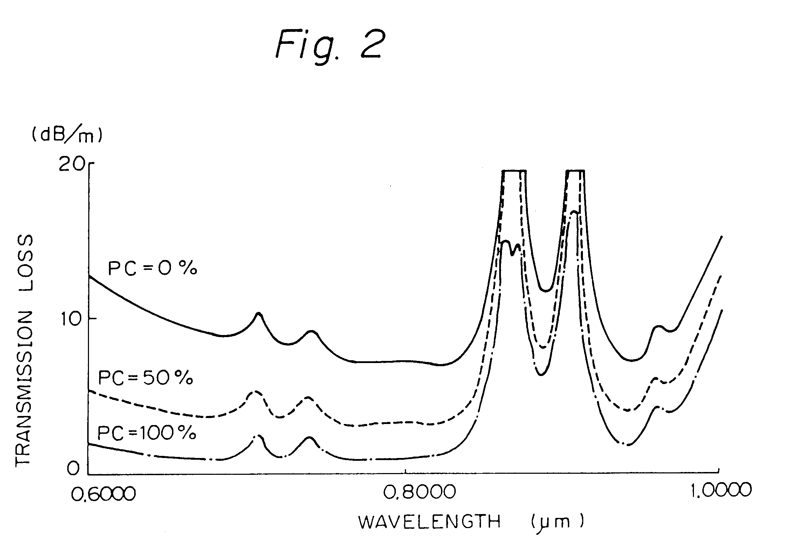

APE KL1-9306 supplied by Bayer, which has a heat distortion temperature of 164°C, is used as the PEC and Panlite L1225 supplied by Teijin, which has a heat distortion temperature of 135°C, is used as the PC, and fibers having a diameter of 1 mm are prepared under the same conditions by the conjugate melt extrusion method, using these resins singly or as blends thereof at predetermined ratios as the core, and PMP (TPX MX002 supplied by Mitsui Petrochemical) having a melting point of 135°C and a softening point of 175°C as the cladding material. The transmission loss, change of the transmission loss, and the heat distortion temperature of each of these fibers are measured and the results shown in Figs. 1 and 2 obtained. Note, the change of the transmission loss observed after standing for 100 hours at 150°C is plotted as the change of the loss.

As seen from Figs. 1 and 2, where PEC alone is used as the core material, the transmission loss in the vicinity of the minimum loss window of 0.8 µm is 7.5 dB/m, and thus very high, but where PC and PEC are used at a ratio of 1/1, the transmission loss is an approximately intermediate value of 3 dB/m. The heat distortion temperature rises with an increase of the amount incorporated of PEC and the heat resistance is better than the heat resistance of PC alone, and when a fiber comprising PC and PEC at a ratio of 1/1 is subjected to a heat resistance test, no shrinkage is observed.

Furthermore, Fig. 1 shows that, if the concentration of PEC in the PC/PEC solid solution is 10 to 79% by weight, each of the transmission loss and the change of the transmission loss is smaller than 5 dB/m and good results are obtained. It is also found that, if the PEC concentration in the PC/PEC solid solution is at least 30% by weight, the heat distortion temperature is higher than 150°C, and thus this concentration is especially preferred, and that if the PEC concentration is not higher than 50% by weight, the transmission loss is smaller than 3 dB/m and especially good results are obtained. Accordingly, in the resin molded body of the present invention, the PEC concentration is preferably 30 to 50% by weight.

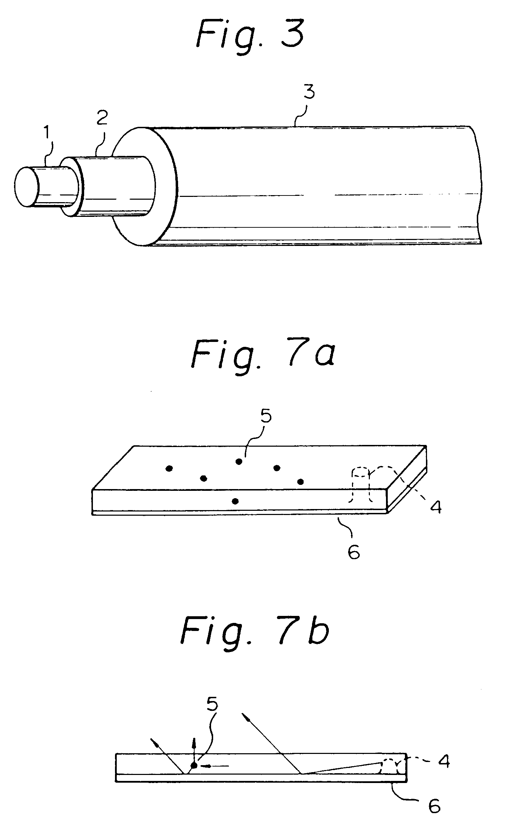

The so-obtained optical fiber comprises, as shown in Fig. 3, a core 1 and a cladding 2 covering the periphery of the core 1, and in general, the periphery of the optical fiber is covered with a covering material 3 not having a light-transmitting property.

In addition to the above-mentioned PMP, a blend of PMMA and polyvinylidene fluoride (PVDF₂) is preferably used as the cladding material of the optical fiber, since PMP or a PMMA/PVDF₂ blend have an excellent heat resistance. Where the PMMA/PVDF₂ blend is used as the cladding material, preferably the amount of PMMA in the blend is at least 80% by weight, or the amount of PVDF₂ is at least 62% by weight.

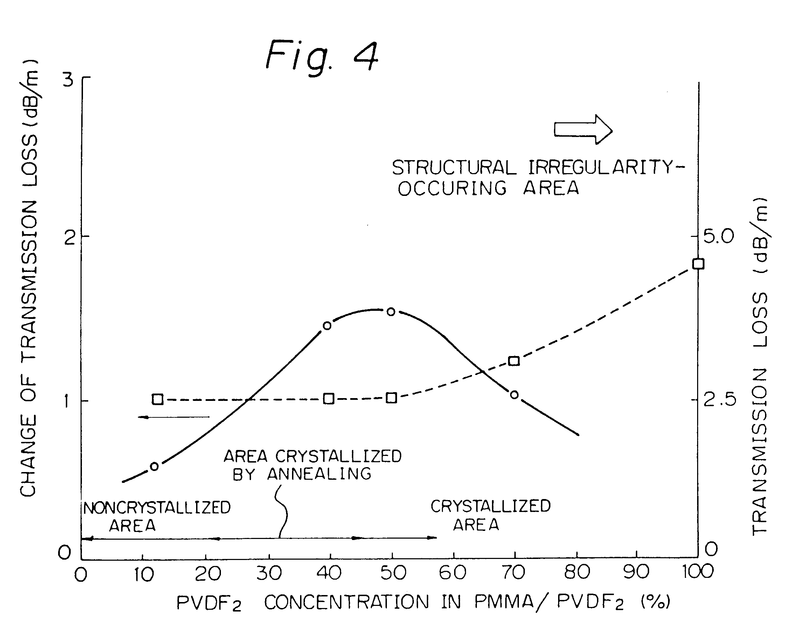

Thus, optical fibers having a diameter of 1 mm were prepared under the same conditions by the conjugate melt extrusion method, using a PC/PEC solid solution (Panlite L1225/APE KL1-9306 = 1/1) as the core material and a PMMA/PVDF₂ blend as the cladding material. Paraglass HR-1000 supplied by Kyowa Gas Kagaku was used as the PMMA and KF Polymer #1000 was used as the PVDF₂. For the fibers, the transmission loss and change of the transmission loss were measured. The results are shown in Fig. 4. From the figure, it is understood that the PMMA/PVDF₂ blend for the cladding material should contain preferably PMMA in an amount of at least 80% by weight, more preferably at least 90% by weight.

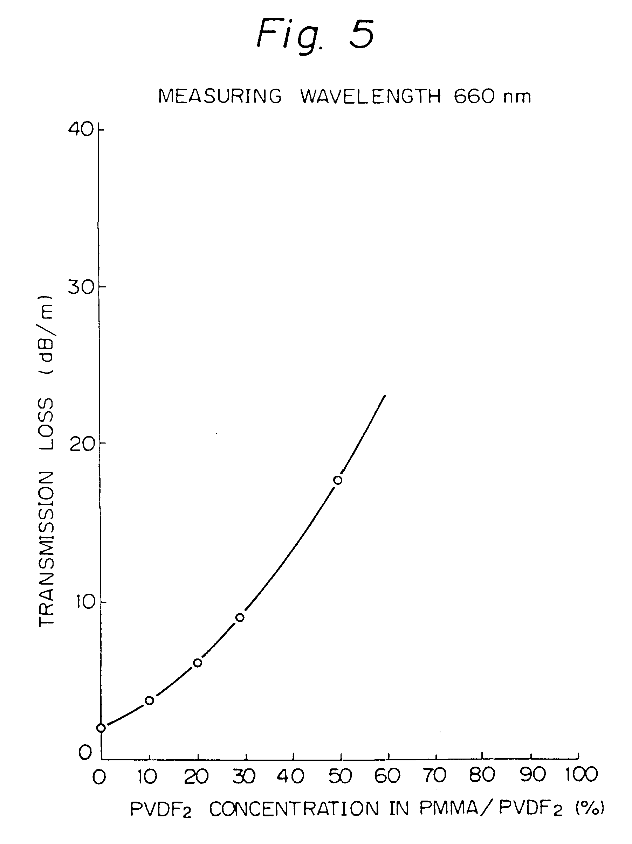

In Fig. 5, the transmission loss is shown for fibers having a diameter of 1 mm prepared using blends of the same PMMA and PVDF₂ as mentioned above. From the figure, it is revealed that the transmission loss of a molded body of the blend containing at least 80% by weight of PMMA is relatively low.

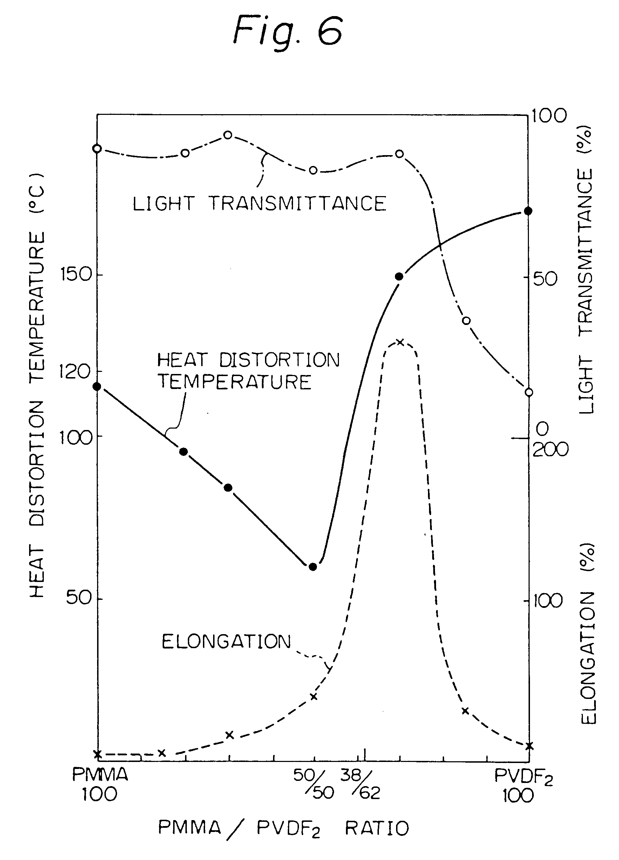

In Fig. 6, the heat distortion temperature, elongation and light transmittance of fibers prepared also using blends of the same PMMA and PVDF₂ as mentioned above. From the figure, it is proved that where the PMMA/PVDF₂ blend contains PVDF₂ in an amount of at least 62% by weight, a molded article of the blend exhibits a high heat distortion temperature, elongation and light transmittance.

A perylene or naphthalimide type organic fluorescent dye can be added to the resin molded body of the present invention constituting the core of an optical fiber as mentioned above, as with this addition of a organic fluorescent dye, it becomes possible to make light incident from the side face of the optical fiber. As typical examples of the perylene or naphthalimide type organic fluorescent dye, there can be mentioned perylene derivatives and naphthalimide derivatives represented by the following formula: 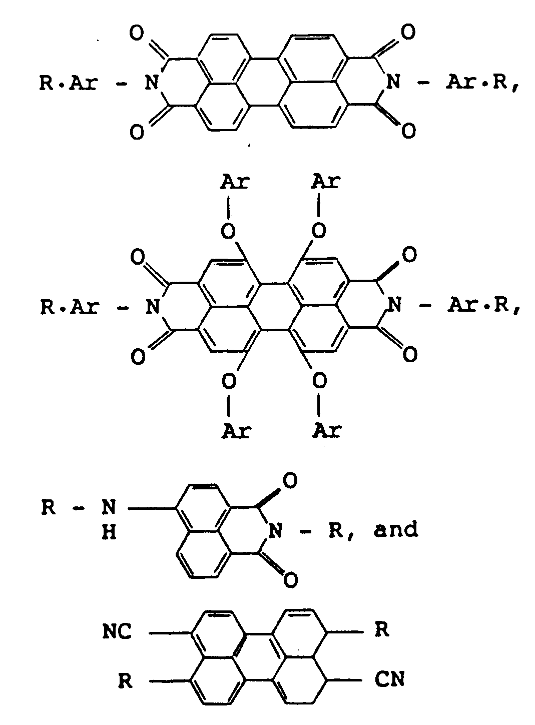
wherein Ar stands for an aryl group and R stands for an atomic group such as an alkyl group.

In the present invention, an organic fluorescent dye as mentioned above can be added to the cladding material according to need.

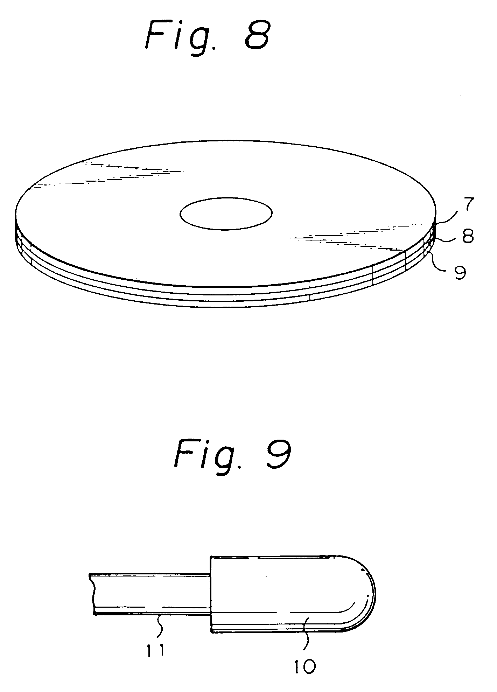

The second embodiment, in which the resin molded body of the present invention is used as a plate-shaped light guide used in a light display portion of a car component or the like, will now be described. As shown in Fig. 7, in which Fig. 7a is a perspective view and Fig. 7b is a sectional view, this light guide has a light source 4 in the interior thereof and comprises an organic fluorescent dye 5 absorbing light from the light source 4 and isotropically transmitting the light. A reflection film of a white paint, aluminum or the like having a light distribution property is formed on one surface (back surface) of the light guide and thus light is uniformly emitted from all of the other surface (front surface). Accordingly, the resin molded body of the present invention can be effectively used as a light guide having the above-mentioned structure.

Moreover, the resin molded body of the present invention can be used as a transparent substrate of an optical disk, as shown in Fig. 8, or as a plastic lens as shown in Fig. 9.

The optical disk shown in Fig. 8 is constructed by forming a vacuum deposition aluminum film 8 on an optical disk substrate 7 composed of the resin molded body of the present invention, and forming a protective film 9 on the vacuum deposition aluminum film 8. The plastic lens 10 shown in Fig. 9 is a non-spherical lens and is connected, for example, to an optical fiber 11 and used as a part of an optical fiber sensor.

According to the present invention, a resin molded body having an excellent optical characteristic and heat resistance can be provided. Especially, when this resin molded body is used as a core of a plastic optical fiber, an excellent plastic optical fiber having a very high heat resistance can be obtained, in which heat distortion does not occur even at a high temperature.

## Claims

1. A plastic optical fiber, which comprises a core (1) made of a solid solution of a polycarbonate and a polyester carbonate, and a cladding (2), characterised in that said cladding material of the optical fiber is a resin based on poly(4-methylpentene-1) or a solid solution of poly(methyl methacrylate) and poly(vinylidene fluoride)

2. A fiber as set forth in claim 1, wherein the polyester carbonate is contained in an amount of 10 to 79% by weight based on the fiber.

3. A fiber as set forth in claim 2, wherein the amount of the polyester carbonate is 30 to 50% by weight based on the fiber.

4. A fiber as set forth in claim 1, wherein the amount of poly(methyl methacrylate ) in said cladding (2) is at least 80% by weight based on the solid solution of poly(methyl methacrylate) and poly(vinylidene fluoride).

5. A fiber as set forth in claim 1, wherein the amount of poly(vinylidene fluoride) in said clading (2) is at least 62% by weight based on the solid solution of poly(methyl methacrylate) and poly(vinylidene fluoride).

6. A fiber as set forth in claim 1, wherein an organic fluorescent dye is incorporated in the core material.

7. A fiber as set forth in claim 6, wherein the organic fluorescent dye is a perylene or naphthalimide type dye.

## Patentansprüche

1. Lichtleiter aus Kunststoff mit einem Kern (1), der aus einer festen Lösung aus einem Polycarbonat und einem Polyestercarbonat besteht, und einem Mantel (2), dadurch gekennzeichnet, daß das Mantelmaterial des Lichtleiters ein Harz auf Basis von Poly(4-methylpenten-1) oder einer festen Lösung aus Poly(methylmethacrylat) und Poly(vinylidenfluorid) ist.

2. Lichtleiter, wie in Anspruch 1 ausgeführt, in dem das Polyestercarbonat in einer Menge von 10 bis 79 Gew.-%, bezogen auf den Leiter, enthalten ist.

3. Lichtleiter, wie in Anspruch 2 ausgeführt, in dem das Polyestercarbonat 30 bis 50 Gew.-%, bezogen auf den Leiter, enthalten ist.

4. Lichtleiter, wie in Anspruch 1 ausgeführt, in dem die Menge an Poly(methylmethacrylat) im Mantel (2) mindestens 80 Gew.-% ist, bezogen auf die feste Lösung aus Poly(methylmethacrylat) und Poly(vinylidenfluorid).

5. Lichtleiter, wie in Anspruch 1 ausgeführt, in dem die Menge an Poly(vinylidenfluorid) im Mantel (2) mindestens 62 Gew.-% ist, bezogen auf die feste Lösung aus Poly(methylmethacrylat) und Poly(vinylidenfluorid).

6. Lichtleiter, wie in Anspruch 1 ausgeführt, in dem ein organischer Fluoreszenzfarbstoff im Kernmaterial eingebracht ist.

7. Lichtleiter, wie in Anspruch 6 ausgeführt, in dem der organische Fluoreszenzfarbstoff ein Farbstoff vom Perylen- oder Naphthalimid-Typus ist.

## Revendications

1. Fibre optique de matière plastique, qui comprend une âme (1) faite d'une solution solide d'un polycarbonate et d'un carbonate de polyester, et une gaine (2), caractérisée en ce que le matériau de ladite gaine de la fibre optique est une résine à base de poly(4-méthylpentène-1) ou une solution solide de polyméthacrylate de méthyle et de polyfluorure de vinylidène.

2. Fibre selon la revendication 1, où le carbonate de polyester est contenu en une proportion pondérale de 10 à 79 % de la fibre.

3. Fibre selon la revendication 2, où la proportion pondérale du carbonate de polyester est de 30 à 50 % de la fibre.

4. Fibre selon la revendication 1, où la proportion pondérale du polyméthacrylate de méthyle contenu dans ladite gaine (2) est d'au moins 80 % de la solution solide de polyméthacrylate de méthyle et de polyfluorure de vinylidène.

5. Fibre selon la revendication 1, où la proportion pondérale de polyfluorure de vinylidène dans ladite gaine (2) est d'au moins 62% de la solution solide de polyméthacrylate de méthyle et de polyfluorure de vinylidène.

6. Fibre selon la revendication 1, où un pigment fluorescent organique est incorpore dans le matériau de l'âme.

7. Fibre selon la revendication 6, où le pigment fluorescent organique est un pigment du type pérylène ou naphtalimide.
